# EUROPEAN PATENT SPECIFICATION

(11) **EP 4 502 354 B1**
(45) Date of publication and mention of the grant of the patent: **11.03.2026**
(21) Application number: 22943458.4
(22) Date of filing: 30.09.2022
(51) Int. Cl.: F02D 11/10, E02F 9/20, F16H 59/08

(54) **EXCAVATOR THROTTLE CONTROL APPARATUS AND CONTROL METHOD**
BAGGERDROSSELSTEUERUNGSVORRICHTUNG UND STEUERUNGSVERFAHREN
APPAREIL ET PROCÉDÉ DE COMMANDE D'ACCÉLÉRATEUR D'EXCAVATRICE

(30) Priority: 25.05.2022 CN 202210572393
(43) Date of publication of application: 05.02.2025
(73) Proprietor: Xuzhou Xcmg Excavator Machinery Co., Ltd., Xuzhou, Jiangsu 221100 (CN)
(72) Inventor: LI, Yadong, Xuzhou, Jiangsu 221100 (CN); GENG, Jiawen, Xuzhou, Jiangsu 221100 (CN); DONG, Yuzhong, Xuzhou, Jiangsu 221100 (CN); LIU, Yang, Xuzhou, Jiangsu 221100 (CN); WEN, Meng, Xuzhou, Jiangsu 221100 (CN); ZHAO, Feifei, Xuzhou, Jiangsu 221100 (CN); ZHU, Yuhang, Xuzhou, Jiangsu 221100 (CN); YU, Zhao, Xuzhou, Jiangsu 221100 (CN); ZHOU, Bingjie, Xuzhou, Jiangsu 221100 (CN); ZHANG, Yang, Xuzhou, Jiangsu 221100 (CN); DU, Dongyang, Xuzhou, Jiangsu 221100 (CN)
(74) Representative: Bayramoglu et al.
(86) International application number: PCT/CN2022/122992
(87) International publication number: WO 2023/226270

(56) References cited:
- EP-A1- 1 770 311
- EP-A1- 1 770 311
- CN-A- 102 996 265
- CN-A- 104 832 298
- CN-A- 107 461 268
- CN-A- 107 461 268
- CN-A- 107 575 311
- CN-A- 107 575 311
- CN-A- 109 367 497
- CN-A- 111 486 226
- CN-A- 114 893 308
- CN-U- 207 295 828

## Description

### TECHNICAL FIELD

The invention relates to an excavator throttle control device and method, belonging to the technical field of electric control of excavators.

### BACKGROUND

At present, the predominant way to control a throttle in excavators is by adjusting a throttle knob to regulate the speed. Typically, the throttle knob is a multi-gear device based on conventional potentiometers. Such devices are prone to gear-skipping due to the reduction in fatigue life of their mechanical gears, leading to poor control stability. The multi-gear mechanical adjustment method cannot be flexibly configured according to diverse operational needs, resulting in limited intelligent control capabilities. With the development of intelligent technology in excavators, traditional electrical systems can no longer adequately meet the diverse needs for intelligent operations. An engine control device is for example disclosed in CN 207 295 828 U.

### SUMMARY

The purpose of the invention is to provide an excavator throttle control device and method, which effectively integrate a power switch and a throttle knob, thereby facilitating intelligent control of an engine throttle of an excavator.

To achieve the above objective, the invention adopts the following technical scheme.

An excavator throttle control device provided by the invention comprises a main controller, an engine control module (ECM), an electronic monitor, a starting unit, a power supply relay and an integrated switch panel;
wherein the main controller and the ECM are interconnected through a bus, the electronic monitor and the main controller are connected through a bus, the power supply relay is electrically connected with the integrated switch panel, and the starting unit is electrically connected with the main controller;
the main controller is used to determine an engine speed according to a gear control instruction sent by the integrated switch panel and send the same to the ECM, and acquire a speed for each gear through the electronic monitor;
the ECM is used to control an engine to execute a corresponding speed;
the electronic monitor records and sets throttle gears, comprising a highest gear, a lowest gear and a target gear;
the starting unit is used to control the startup of an excavator system;
the power supply relay is used to power on the excavator engine; and
the integrated switch panel is used to control the throttle gear through operational switches and transmit the control instruction to the main controller.

Further, the integrated switch panel at least comprises a switch control unit and three operational switches: a button, a knob, and a one-touch start switch, and the main controller is connected with the switch control unit;
the button is used to control throttle modes, comprising a long press mode, a double-click mode and a single-click mode;
the knob is used to control the power supply and reset of the excavator engine;
the one-touch start switch is used to control the excavator engine to start; and
the switch control unit is used to transmit control signals of each operational switch to the main controller.

Further,
in the long press mode, the switch control unit sends an instruction for executing the preset target gear to the main controller; and
in the double-click mode, the switch control unit sends an instruction for executing the lowest gear to the main controller; and
in the single-click mode, the switch control unit sends a gear switching instruction to the main controller, alternating between upshifting and downshifting with each press.

Further, the knob has an initial gear, a first gear and a second gear;
in the initial gear, the engine is in a reset state and is not powered on;
in the first gear, the power supply relay is powered to engage to control the excavator engine to be powered on;
the second gear is used to change the throttle gear;
in the single-click mode of the button, each press of the knob changes the gear state; if the current single-click mode is for upshifting, the switch control unit sends an instruction for increasing the gear by one to the main controller; and if the current single-click mode is for downshifting, the switch control unit sends an instruction for decreasing the gear by one to the main controller.

Further, the integrated switch panel further integrates a knob initial gear indicator light, a knob first gear indicator light and a knob second gear indicator light to indicate a current gear of the knob.

Further, the integrated switch panel at least comprises a switch control unit and three operational switches: a button, a knob, and a one-touch start switch, and the main controller is connected with the switch control unit;
the button is used to control throttle modes, comprising a long press mode and a double-click mode;
the knob is used to control throttle gears, comprising throttle increase and throttle decrease;
the one-touch start switch is used to control the excavator engine to be powered on, started and shut down; and
the switch control unit is used to transmit control instructions of each operational switch to the main controller.

Further,
in the long press mode, the switch control unit sends an instruction for executing the preset target gear to the main controller; and
in the double-click mode, the switch control unit sends an instruction for executing the lowest gear to the main controller.

Further, a middle position of the knob is an initial gear, with clockwise rotation for throttle increase and counterclockwise rotation for throttle decrease, and both gears feature a reset function;
the knob has contact modes, comprising a short contact mode and a long contact mode;
in the short contact mode, when in a throttle increase mode, each contact causes the switch control unit to send an instruction for increasing the gear by one to the main controller; when in a throttle decrease mode, each contact causes the switch control unit to send an instruction for decreasing the gear by one to the main controller;
in the long contact mode, when in the throttle increase mode, a long contact causes the switch control unit to send an instruction for executing the highest gear to the main controller; when in the throttle decrease mode, a long contact causes the switch control unit to send an instruction for executing the lowest gear to the main controller;
if contact time is less than a preset duration, it is deemed a short contact; and if the contact time is greater than the preset duration, it is considered a long contact.

Further, the one-touch start switch has a single-click mode and a long press mode;
in the single-click mode, each press results in the engine being powered on, started, and shut down in sequence; and
in the long press mode, the engine is powered off and shut down with a delay.

Further, the button is an electronic switch button or a touch screen button.

Further, the electronic monitor is specifically used to,
determine whether to enable gear memory, if the gear memory is enabled, the engine starts at the lowest gear speed and reaches a last remembered speed;
   and
set the target gear, the lowest gear, the highest gear and a single-click gear.

The invention further provides an excavator throttle control method, comprising:
turning the knob on the integrated switch panel in the excavator throttle control device mentioned above to the first gear, so that the power supply relay is powered to engage to control the engine to be powered on; controlling the engine to start through the one-touch start switch on the integrated switch panel;
determining whether poweroff gear memory is enabled, and if so, controlling the ECM through the main controller to make the engine execute a last gear speed prior to poweroff;
if the poweroff gear memory is not enabled, checking the mode of the button on the integrated switch panel;
in response to the long press mode, controlling the ECM through the main controller to make the engine execute a preset target gear speed;
in response to the double-click mode, controlling the ECM through the main controller to make the engine execute a preset lowest gear speed;
in response to the single-click mode, determining, through the main controller, whether to upshift or downshift; at the same time, changing the gear state with each press of the knob, that is, in the upshift mode, the gears increase progressively, and in the downshift mode, the gears decrease progressively; and determining, through the main controller, the changed gear and the corresponding speed, and controlling the ECM to make the engine execute the corresponding gear speed.

The invention further provides an excavator throttle control method, comprising:
pressing the one-touch start switch on the integrated switch panel in the excavator throttle control device mentioned above, so that the power supply relay is powered to engage to control the engine to be powered on; pressing the one-touch start switch again to start the engine;
determining whether poweroff gear memory is enabled, and if so, controlling the ECM through the main controller to make the engine execute a last gear speed prior to poweroff;
if the poweroff gear memory is not enabled, checking the mode of the button on the integrated switch panel;
in response to the long press mode, controlling the ECM through the main controller to make the engine execute a preset target gear speed;
in response to the double-click mode, controlling the ECM through the main controller to make the engine execute a preset lowest gear speed;
checking the gear state of the knob on the integrated switch panel;
in response to the throttle increase mode, determining the contact mode; in response to a short contact, sending an instruction for increasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the highest gear to the main controller, allowing the main controller to determine a speed corresponding to the instruction, and sending an instruction for executing the corresponding speed to the ECM to make the engine execute the highest speed;
in response to the throttle decrease mode, determining the contact mode; in response to a short contact, sending an instruction for decreasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the lowest gear to the main controller, allowing the main controller to determine a speed corresponding to the instruction, and sending an instruction for executing the corresponding speed to the ECM to make the engine execute the lowest speed;
if contact time is less than a preset duration, it is deemed a short contact; and if the contact time is greater than the preset duration, it is considered a long contact.

The invention has the following beneficial effects.

The invention effectively integrates a power switch and a throttle knob to achieve intelligent control of an excavator engine throttle, simplify the structure of the throttle knob and enhance its reliability. Further, the invention utilizes intelligent throttle control and a composite key function to achieve switching between throttle increase and decrease modes, as well as quick throttle control, enhancing the level of intelligence. The use of a resettable increase/decrease knob gear minimizes reliability issues caused by multiple gears and improves operability.

### BRIEF DESCRIPTION OF THE DRAWINGS

Fig. 1 is a block diagram of an excavator throttle control system according to Embodiment 1 of the invention;
Fig. 2 is a structural diagram of an integrated switch panel in Embodiment 1 of the invention;
Fig. 3 is a flowchart of an excavator throttle control method according to Embodiment 2 of the invention;
Fig. 4 is a structural diagram of an integrated switch panel in Embodiment 3 of the invention; and
Fig. 5 is a flowchart of an excavator throttle control method according to Embodiment 4 of the invention.

### DETAILED DESCRIPTION OF THE EMBODIMENTS

The invention will be further described below. The following embodiments are only used to illustrate the technical scheme of the invention more clearly, but cannot be used to limit the protection scope of the invention.

### Embodiment 1

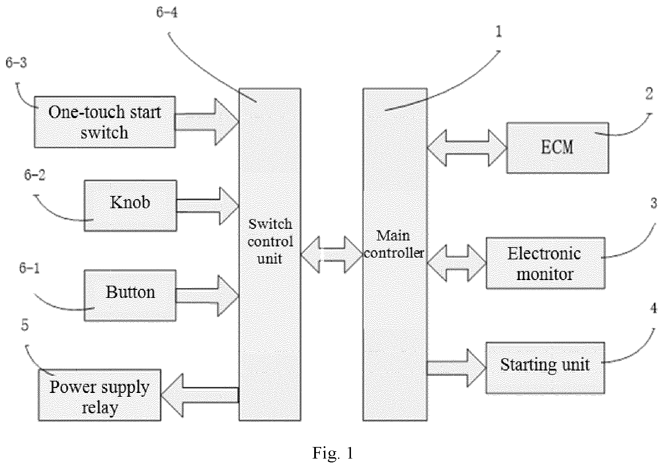

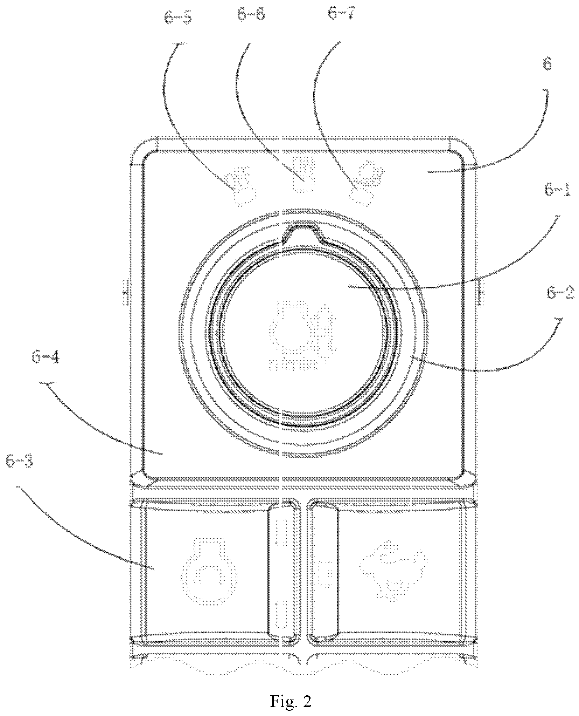

This embodiment provides an excavator throttle control device, referring to Fig. 1, comprising a main controller 1, an ECM 2, an electronic monitor 3, a starting unit 4, a power supply relay 5 and an integrated switch panel 6 (referring to Fig. 2).

Specifically, the main controller 1 and the ECM 2 are interconnected through a bus, the electronic monitor 3 and the main controller 1 are connected through a bus, the power supply relay 5 is electrically connected with the integrated switch panel 6, and the starting unit 4 is electrically connected with the main controller 1.

Referring to Fig. 1, the integrated switch panel 6 at least comprises a switch control unit 6-4 and three operational switches: a button 6-1, a knob 6-2, and a one-touch start switch 6-3, and the main controller 1 is connected with the switch control unit 6-4.

Referring to Fig. 2, the button 6-1 is used to control throttle modes. Specifically, the button 6-1 has a long press mode, a double-click mode and a single-click mode; in the long press mode, the switch control unit 6-4 sends an instruction for executing a preset target gear to the main controller 1, and the main control 1 determines an engine speed according to the instruction and sends the same to the ECM to make the engine execute a speed of the corresponding gear; in the double-click mode, the switch control unit 6-4 sends an instruction for executing a lowest gear to the main controller 1, and the main control 1 determines an engine speed according to the instruction and sends the same to the ECM to make the engine execute a speed of the corresponding gear; and in the single-click mode, alternating between upshifting and downshifting occurs with each press, and the switch control unit 6-4 sends a gear switching instruction to the main controller 1. The target gear and the lowest gear may be flexibly set through the electronic monitor.

The knob 6-2 is used to control the power supply and reset of the excavator engine. At the start, the knob is in an initial state, with an indicator light 6-5 lit, and the engine is powered off. Turning the knob 6-2 to a first gear causes the power supply relay 5 to be powered to engage to control the engine to be powered on, at which point an indicator light 6-6 is lit. Turning the knob 6-2 to a second gear allows for changing the throttle gear in the single-click mode. In the single-click mode, when the knob 6-2 is set to the second gear, each press of the knob 6-2 changes the gear state, enabling stepwise upshifting or downshifting. The switch control unit 6-4 sends an instruction for upshifting or downshifting to the main controller 1, and the main control 1 determines an engine speed according to the instruction and sends the same to the ECM to make the engine execute a speed of the corresponding gear.

It should be noted that single-click gear settings can be easily adjusted via the electronic monitor.

The one-touch start switch 6-3 is used to control the engine to start.

The switch control unit 6-4 is used to transmit control instructions of each operational switch to the main controller.

As a preferred embodiment, the button 6-1 may be an electronic switch button (self-reset button), or a touch screen button.

As a preferred embodiment, the knob 6-2 is a two-gear knob, where the first gear is self-locking and the second gear is reset.

Referring to Fig. 2, the integrated switch panel 6 further integrates a knob initial gear indicator light 6-5, a knob first gear indicator light 6-6 and a knob second gear indicator light 6-7 to indicate a current gear of the knob 6-2.

In this embodiment, the main controller is used to determine the engine speed according to a gear control signal sent by the switch control unit, and control the ECM to perform corresponding actions.

In this embodiment, the ECM is used to control the engine to execute a corresponding speed.

In this embodiment, the electronic monitor is used to record and set throttle gears. Specifically, whether to enable gear memory is set on the electronic monitor, and if the gear memory is enabled, the engine starts at the lowest gear speed and then returns to a last remembered speed. The target gear, lowest gear, highest gear and single-click gear speed may also be directly set on the electronic monitor.

In this embodiment, the starting unit is used to control the startup of an excavator system.

In this embodiment, the power supply relay is used to power on the excavator engine.

In this embodiment, the integrated switch panel is used to control the throttle gear through operational switches and transmit the control signal to the main controller.

In this embodiment, an operator may return the knob 6-2 to the initial gear to power off and shut down the engine.

### Embodiment 2

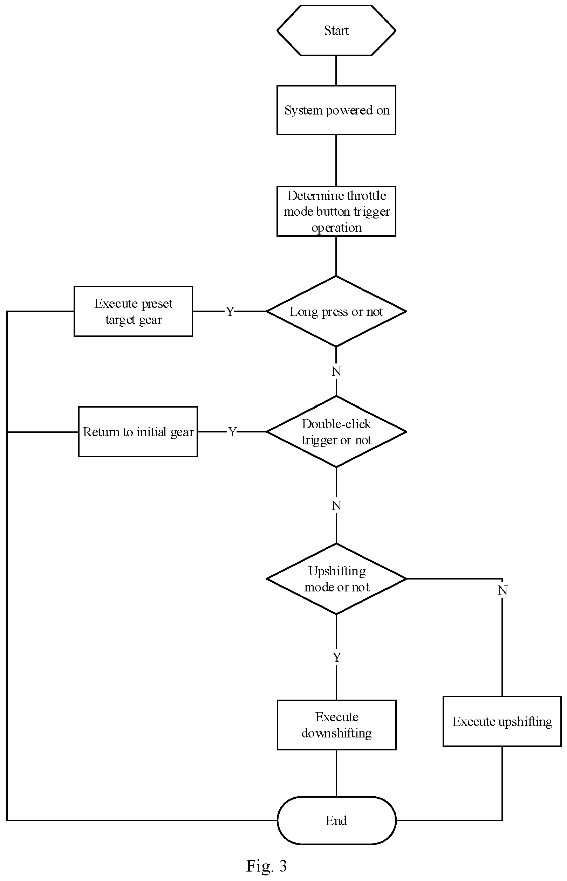

This embodiment provides an excavator throttle control method based on the excavator throttle control device of Embodiment 1, as shown in Fig. 3, comprising the following steps:
Step 1, turning the knob 6-2 on the integrated switch panel 6 to the first gear, so that the power supply relay 5 is powered to engage to control the engine to be powered on; controlling the engine to start through the one-touch start switch;
Step 2, determining whether poweroff gear memory is enabled, and if so, controlling the ECM through the main controller to make the engine execute a last gear speed prior to poweroff, an operator being able to set whether to enable the poweroff gear memory on the electronic monitor;
Step 3, if the poweroff gear memory is not enabled, checking the mode of the throttle mode button 6-1 on the integrated switch panel 6;
in response to the long press mode, controlling the ECM through the main controller to make the engine execute a preset target gear speed; and
in response to the double-click mode, controlling the ECM through the main controller to make the engine execute a preset lowest gear speed.

During operation, if the mode of the button 6-1 is switched to the single-click mode and the knob 6-2 is switched to the second gear, whether it is an upshift mode or a downshift mode is determined through the main controller; the gear state is changed with each press of the knob 6-2, that is, in the upshift mode, the gears increase progressively, and in the downshift mode, the gears decrease progressively; and the main controller controls the ECM to make the engine execute the corresponding gear speed.

It should be noted that after the engine starts, it is controlled to reach the target gear speed at a certain slope.

It should be noted that the knob may return to the initial gear to power off and shut down the engine.

### Embodiment 3

This embodiment provides an excavator throttle control device, the overall structure of which is the excavator throttle control device in Embodiment 1 shown in Fig. 1, comprising a main controller 1, an ECM 2, an electronic monitor 3, a starting unit 4, a power supply relay 5 and an integrated switch panel 6. The main controller 1 and the ECM 2 are interconnected through a bus, the electronic monitor 3 and the main controller 1 are connected through a bus, the power supply relay 5 is electrically connected with the integrated switch panel 6, and the starting unit 4 is electrically connected with the main controller 1.

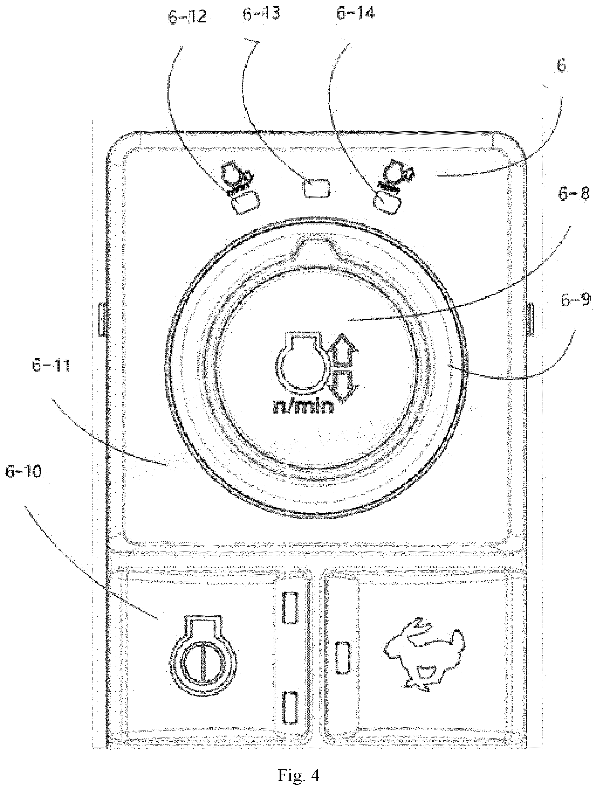

Referring to Fig. 4, in this embodiment, the integrated switch panel 6 at least comprises a switch control unit 6-11 and three operational switches: a button 6-8, a knob 6-9, and a one-touch start switch 6-10, and the main controller 1 is connected with the switch control unit 6-11.

The button 6-8 is used to control throttle modes. Specifically, the button 6-8 has a long press mode and a double-click mode; in the long press mode, the switch control unit 6-11 sends an instruction for executing a preset target gear to the main controller 1, and the main control 1 determines an engine speed according to the instruction and sends the same to the ECM to make the engine execute a speed of the corresponding gear; in the double-click mode, the switch control unit 6-11 sends an instruction for executing a lowest gear to the main controller 1, and the main control 1 determines an engine speed according to the instruction and sends the same to the ECM to make the engine execute a speed of the corresponding gear.

The knob 6-9 is used to control throttle gears.

Specifically, the knob 6-2 is a two-gear knob, with a middle position representing the initial gear, where an indicator light 6-13 is on; clockwise rotation corresponds to throttle increase, with an indicator light 6-14 lit; counterclockwise rotation corresponds to throttle decrease, with an indicator light 6-12 lit. Both gears feature a reset function.

Further, the knob has contact modes, comprising a short contact mode and a long contact mode;
in the short contact mode, when in a throttle increase mode, each contact causes the switch control unit 6-11 to send an instruction for increasing the gear by one to the main controller 1; when in a throttle decrease mode, each contact causes the switch control unit 6-11 to send an instruction for decreasing the gear by one to the main controller 1;
in the long contact mode, when in the throttle increase mode, a long contact causes the switch control unit 6-11 to send an instruction for executing the highest gear to the main controller 1; when in the throttle decrease mode, a long contact causes the switch control unit 6-11 to send an instruction for executing the lowest gear to the main controller 1.

It should be noted that if contact time is less than a preset duration, it is deemed a short contact; and if the contact time is greater than the preset duration, it is considered a long contact.

The one-touch start switch 6-10 is used to control the excavator engine to be powered on and started.

Specifically, the one-touch start switch 6-10 has a single-click mode and a long press mode. In the single-click mode, each press results in the engine being powered on, started, and shut down in sequence. For example, when the one-touch start switch 6-10 is pressed, the power supply relay 5 is powered to engage, and power is maintained through a retention circuit, enabling the excavator engine to be powered on; pressing the one-touch start switch 6-10 again controls the engine startup; pressing the one-touch start switch 6-10 again causes the engine to shut down immediately; and in the long press mode, the engine may be powered off and shut down with a delay.

The switch control unit 6-11 is used to send control instructions of the three operational switches to the main controller 1.

As a preferred embodiment, the button 6-8 may be an electronic switch button (self-reset button), or a touch screen button.

As a preferred embodiment, the integrated switch panel also integrates a throttle decrease indicator light 6-12, an initial gear indicator light 6-13, and a throttle increase indicator light 6-14 to indicate the status of the knob.

In this embodiment, the functions of the main controller, the ECM, the electronic monitor, the starting unit and the power supply relay are the same as those in Embodiment 1, and will not be repeated here.

It should be noted that the knob 6-2 may return to the initial gear to power off and shut down the engine.

### Embodiment 4

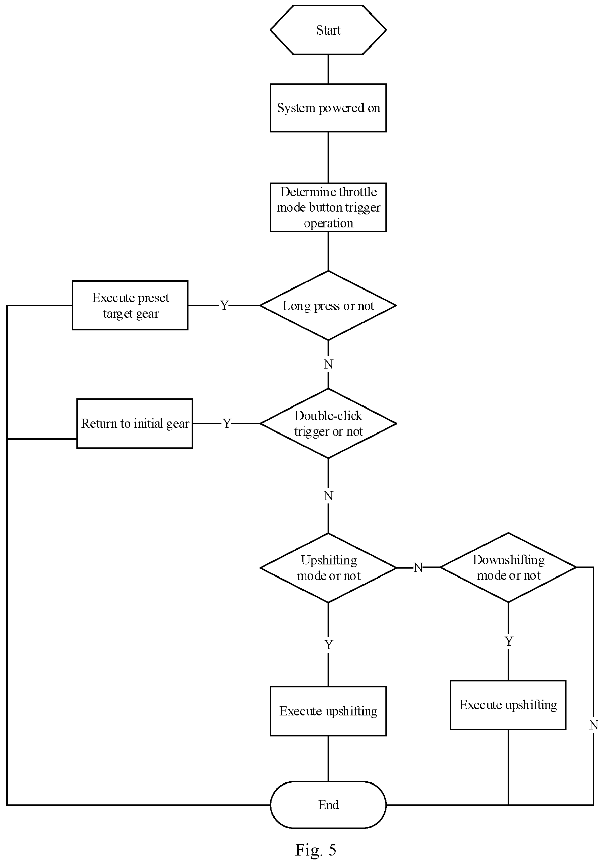

This embodiment provides an excavator throttle control method based on the excavator throttle control device of Embodiment 3, as shown in Fig. 5, comprising the following steps:
Step 1, pressing the one-touch start switch 6-10 on the integrated switch panel 6, so that the power supply relay 5 is powered to engage, and power is maintained through a retention circuit, enabling the excavator engine to be powered on; pressing the one-touch start switch 6-10 again to start the engine;
Step 2, determining whether poweroff gear memory is enabled, and if so, controlling the ECM through the main controller to make the engine execute a last gear speed prior to poweroff, an operator being able to set whether to enable the poweroff gear memory on the electronic monitor;
Step 3, if the poweroff gear memory is not enabled, checking the status of the throttle mode button 6-8 on the integrated switch panel;
in response to the long press mode, controlling the ECM through the main controller to make the engine execute a preset target gear speed, this gear speed being able to be configured as a common speed in the electronic monitor 3, allowing the operator to easily reach their frequently used speed with a one-touch operation;
in response to the double-click mode, controlling the ECM through the main controller to make the engine execute a preset lowest gear speed;
checking the gear state of the knob 6-9 on the integrated switch panel during operation;
in response to the throttle increase mode, determining the contact mode; in response to a short contact, sending an instruction for increasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the highest gear to the main controller, allowing the main controller to determine a speed corresponding to the instruction, and sending an instruction for executing the corresponding speed to the ECM to make the engine execute the highest speed;
in response to the throttle decrease mode, determining the contact mode; in response to a short contact, sending an instruction for decreasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the lowest gear to the main controller, allowing the main controller to determine a speed corresponding to the instruction, and sending an instruction for executing the corresponding speed to the ECM to make the engine execute the lowest speed.

It should be noted that after the engine starts, it is controlled to reach the target gear speed at a certain slope.

It should be noted that the engine may be shut down by long pressing the one-touch start switch 6-10. If the engine speed is above the first gear speed at shutdown, the system may be configured for a delayed shutdown, cutting off power only after the control system is in the first gear mode and the preset duration is reached.

The above are only preferred embodiments of the invention, and it should be pointed out that for those of ordinary skill in the art, without departing from the technical principle of the invention, several improvements and variations can be made, and these improvements and variations should also be considered within the scope of protection of the invention, which is defined in the appended claims.

## Claims

1. An excavator throttle control device, comprising a main controller (1), an engine control module (2) (ECM), an electronic monitor (3), a starting unit (4), a power supply relay (5) and an integrated switch panel (6);
wherein the main controller (1) and the ECM (2) are interconnected through a bus, the electronic monitor (3) and the main controller (1) are connected through a bus, the power supply relay (5) is electrically connected with the integrated switch panel (6), and the starting unit (4) is electrically connected with the main controller;
the main controller (1)
is used to determine an engine speed according to a gear control instruction sent by the integrated switch panel and send the same to the ECM, and acquire a speed for each gear through the electronic monitor;
the ECM (2) is used to control an engine to execute a corresponding speed;
the electronic monitor (3)
records and sets throttle gears, comprising a highest gear, a lowest gear and a target gear;
the starting unit (4) is used to control the startup of an excavator system;
the power supply relay (5) is used to power on the excavator engine; and
the integrated switch panel (6) is used to control the throttle gear through operational switches and transmit the control instruction to the main controller.

2. The excavator throttle control device according to Claim 1, wherein the integrated switch panel at least comprises a switch control unit and three operational switches: a button, a knob, and a one-touch start switch, and the main controller is connected with the switch control unit;
the button (6-1)
is used to control throttle modes, comprising a long press mode, a double-click mode and a single-click mode;
the knob (6-2) is used to control the power supply and reset of the excavator engine; the one-touch start switch (6-3) is used to control the excavator engine to start; and
the switch control unit (6-4) is used to transmit control signals of each operational switch to the main controller.

3. The excavator throttle control device according to Claim 2, wherein
in the long press mode, the switch control unit sends an instruction for executing the preset target gear to the main controller;
in the double-click mode, the switch control unit sends an instruction for executing the lowest gear to the main controller; and
in the single-click mode, the switch control unit sends a gear switching instruction to the main controller, alternating between upshifting and downshifting with each press.

4. The excavator throttle control device according to Claim 2, wherein the knob has an initial gear, a first gear and a second gear;
in the initial gear, the engine is in a reset state and is not powered on;
in the first gear, the power supply relay is powered to engage to control the excavator engine to be powered on;
the second gear is used to change the throttle gear;
in the single-click mode of the button, each press of the knob changes the gear state; if the current single-click mode is for upshifting, the switch control unit sends an instruction for increasing the gear by one to the main controller; and if the current single-click mode is for downshifting, the switch control unit sends an instruction for decreasing the gear by one to the main controller.

5. The excavator throttle control device according to Claim 4, wherein the integrated switch panel further integrates a knob initial gear indicator light, a knob first gear indicator light and a knob second gear indicator light to indicate a current gear of the knob.

6. The excavator throttle control device according to Claim 1, wherein the integrated switch panel at least comprises a switch control unit and three operational switches: a button, a knob, and a one-touch start switch, and the main controller is connected with the switch control unit;
the button (6-1) is used to control throttle modes, comprising a long press mode and a double-click mode;
the knob (6-2) is used to control throttle gears, comprising throttle increase and throttle decrease;
the one-touch start switch (6-3) is used to control the excavator engine to be powered on, started and shut down; and
the switch control unit (6-4) is used to transmit control instructions of each operational switch to the main controller.

7. The excavator throttle control device according to Claim 6, wherein
in the long press mode, the switch control unit sends an instruction for executing the preset target gear to the main controller; and
in the double-click mode, the switch control unit sends an instruction for executing the lowest gear to the main controller.

8. The excavator throttle control device according to Claim 6, wherein a middle position of the knob is an initial gear, with clockwise rotation for throttle increase and counterclockwise rotation for throttle decrease, and both gears feature a reset function;
the knob has contact modes, comprising a short contact mode and a long contact mode;
in the short contact mode, when in a throttle increase mode, each contact causes the switch control unit to send an instruction for increasing the gear by one to the main controller; when in a throttle decrease mode, each contact causes the switch control unit to send an instruction for decreasing the gear by one to the main controller;
in the long contact mode, when in the throttle increase mode, a long contact causes the switch control unit to send an instruction for executing the highest gear to the main controller; when in the throttle decrease mode, a long contact causes the switch control unit to send an instruction for executing the lowest gear to the main controller;
if contact time is less than a preset duration, it is deemed a short contact; and if the contact time is greater than the preset duration, it is considered a long contact.

9. The excavator throttle control device according to Claim 6, wherein the one-touch start switch has a single-click mode and a long press mode;
in the single-click mode, each press results in the engine being powered on, started, and shut down in sequence; and
in the long press mode, the engine is powered off and shut down with a delay.

10. The excavator throttle control device according to Claims 2 or 6, wherein the button is an electronic switch button or a touch screen button.

11. The excavator throttle control device according to Claims 2 or 6, wherein the electronic monitor is specifically used to,
determine whether to enable gear memory, if the gear memory is enabled, the engine starts at the lowest gear speed and reaches a last remembered speed;
and
set the target gear, the lowest gear, the highest gear and a single-click gear.

12. An excavator throttle control method, comprising:
turning the knob (6-2) on the integrated switch panel (6) in the excavator throttle control device according to any one of Claims 2-5 to the first gear, so that the power supply relay is powered to engage to control the engine to be powered on; controlling the engine to start through the one-touch start switch on the integrated switch panel;
determining whether poweroff gear memory is enabled, and if so, controlling the ECM through the main controller to make the engine execute a last gear speed prior to poweroff;
if the poweroff gear memory is not enabled, checking the mode of the button on the integrated switch panel;
in response to the long press mode, controlling the ECM through the main controller to make the engine execute a preset target gear speed;
in response to the double-click mode, controlling the ECM through the main controller to make the engine execute a preset lowest gear speed;
in response to the single-click mode, determining, through the main controller, whether to upshift or downshift; at the same time, changing the gear state with each press of the knob, that is, in the upshift mode, the gears increase progressively, and in the downshift mode, the gears decrease progressively; and determining, through the main controller, the changed gear and the corresponding speed, and controlling the ECM to make the engine execute the corresponding gear speed.

13. An excavator throttle control method, comprising:
pressing the one-touch start switch (6-3) on the integrated switch panel (6) in the excavator throttle control device according to any one of Claims 6-9, so that the power supply relay is powered to engage to control the engine to be powered on; pressing the one-touch start switch again to start the engine;
determining whether poweroff gear memory is enabled, and if so, controlling the ECM through the main controller to make the engine execute a last gear speed prior to poweroff;
if the poweroff gear memory is not enabled, checking the mode of the button on the integrated switch panel;
in response to the long press mode, controlling the ECM through the main controller to make the engine execute a preset target gear speed;
in response to the double-click mode, controlling the ECM through the main controller to make the engine execute a preset lowest gear speed;
checking the gear state of the knob on the integrated switch panel;
in response to the throttle increase mode, determining the contact mode; in response to a short contact, sending an instruction for increasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the highest gear to the main controller, allowing the main controller to determine a speed corresponding to the instruction, and sending an instruction for executing the corresponding speed to the ECM to make the engine execute the highest speed;
in response to the throttle decrease mode, determining the contact mode; in response to a short contact, sending an instruction for decreasing the gear to the main controller, allowing the main controller to determine a new gear and a corresponding speed, and sending an instruction for executing the corresponding speed to the ECM to make the engine execute the corresponding speed; in response to a long contact, sending an instruction for adjusting to the lowest gear to the main controller, allowing the main controller to determine a speed corresponding to the instruction, and sending an instruction for executing the corresponding speed to the ECM to make the engine execute the lowest speed;
if contact time is less than a preset duration, it is deemed a short contact; and if the contact time is greater than the preset duration, it is considered a long contact.

## Patentansprüche

1. Aushubmaschinengashebelsteuervorrichtung, umfassend einen Haupt-Controller (1), ein Motorsteuerungsmodul (2) (ECM), einen elektronischen Monitor (3), eine Starteinheit (4), ein Stromversorgungsrelais (5) und eine integrierte Schaltkonsole (6);
wobei der Haupt-Controller (1) und das ECM (2) durch einen Bus zusammengeschaltet sind, der elektronische Monitor (3) und der Haupt-Controller (1) durch einen Bus verbunden sind, das Stromversorgungsrelais (5) mit der integrierten Schaltkonsole (6) elektrisch verbunden ist und die Starteinheit (4) mit dem Haupt-Controller elektrisch verbunden ist;
wobei der Haupt-Controller (1) dazu dient, eine Motordrehzahl gemäß einer Gangsteueranweisung zu bestimmen, die durch die integrierte Schaltkonsole gesendet wird, und diese an das ECM zu senden und eine Drehzahl für jeden Gang durch den elektronischen Monitor abzurufen;
das ECM (2) dazu dient, einen Motor zu steuern, um eine entsprechende Drehzahl auszuführen:
der elektronische Monitor (3) Gashebelgänge aufzeichnet und einstellt, die einen höchsten Gang, einen niedrigsten Gang und einen Zielgang umfassen;
die Starteinheit (4) zum Steuern des Startens des Aushubmaschinensystems dient;
das Stromversorgungsrelais (5) zum Versorgen des Aushubmaschinenmotors mit Strom dient; und
die integrierte Schaltkonsole (6) dazu dient, den Gashebelgang durch Betriebsschalter zu steuern und die Steueranweisung an den Haupt-Controller zu übertragen.

2. Aushubmaschinengashebelsteuervorrichtung nach Anspruch 1, wobei die integrierte Schaltkonsole wenigstens eine Schaltsteuerungseinheit und drei Betriebsschalter umfasst: eine Taste, einen Knopf und einen One-Touch-Startschalter, und die Haupt-Controller mit der Schaltsteuerungseinheit verbunden ist;
wobei die Taste (6-1) zum Steuern von Gashebelmodi dient, die einen Langdrückmodus, einen Doppelklickmodus und einen Einzelklickmodus umfassen;
der Knopf (6-2) zum Steuern der Stromversorgung und Zurücksetzen des Aushubmaschinenmotors dient;
der One-Touch-Startschalter (6-3) zum startenden Steuern des Aushubmaschinenmotors dient; und
die Schaltsteuerungseinheit (6-4) zum Übertragen von Steuersignalen der einzelnen Betriebsschalter an den Haupt-Controller dient.

3. Aushubmaschinengashebelsteuervorrichtung nach Anspruch 2, wobei
die Schaltsteuerungseinheit im Langdrückmodus eine Anweisung zum Ausführen des voreingestellten Zielgang an den Haupt-Controller sendet;
die Schaltsteuerungseinheit im Doppelklickmodus eine Anweisung zum Ausführen des niedrigste Gangs an den Haupt-Controller sendet;
die Schaltsteuerungseinheit im Einzelklickmodus eine Gangschaltanweisung an den Haupt-Controller sendet und dabei mit jedem Drücken zwischen Hochschalten und Herunterschalten wechselt.

4. Aushubmaschinengashebelsteuervorrichtung nach Anspruch 2, wobei der Knopf einen Startgang, einen ersten Gang und einen zweiten Gang aufweist;
wobei sich der Motor im Startgang in einem Rücksetzzustand befindet und nicht eingeschaltet ist;
im ersten Gang das Stromversorgungsrelais mit Strom versorgt und aktiviert wird, um den Aushubmaschinenmotor einschaltend zu steuern;
der zweite Gang zum Ändern des Gashebelgangs dient;
im Einzelklickmodus der Taste jedes Drücken des Knopfs den Gangzustand ändert; wobei, wenn der Einzelklickmodus zum Hochschalten dient, die Schaltsteuerungseinheit eine Anweisung zum Erhöhen des Gangs um eins an den Haupt-Controller sendet; und wenn der Einzelklickmodus zum Herunterschalten dient, die Schaltsteuerungseinheit eine Anweisung zum Herabsetzen des Gangs um eins an den Haupt-Controller sendet.

5. Aushubmaschinengashebelsteuervorrichtung nach Anspruch 4, wobei in die integrierte Schaltkonsole ferner eine Knopf-Startgang-Anzeigeleuchte, eine Knopf-erster-Gang-Anzeigeleuchte und eine Knopf-zweiter-Gang-Anzeigeleuchte integriert ist, um einen derzeitigen Gang des Knopfes anzuzeigen.

6. Aushubmaschinengashebelsteuervorrichtung nach Anspruch 1, wobei die integrierte Schaltkonsole wenigstens eine Schaltsteuerungseinheit und drei Betriebsschalter umfasst: eine Taste, einen Knopf und einen One-Touch-Startschalter, und der Haupt-Controller mit der Schaltsteuerungseinheit verbunden ist;
wobei die Taste (6-1) zum Steuern von Gashebelmodi dient, die einen Langdrückmodus und einen Doppelklickmodus umfassen;
der Knopf (6-2) zum Steuern der Gashebelgänge dient, die eine Gassteigerung und eine Gasverringerung umfassen:
der One-Touch-Startschalter (6-3) zum einschaltenden, startenden und herunterfahrenden Steuern des Aushubmaschinenmotors dient; und
die Schaltsteuerungseinheit (6-4) zum Übertragen von Steueranweisungen der einzelnen Betriebsschalter an den Haupt-Controller dient.

7. Aushubmaschinengashebelsteuervorrichtung nach Anspruch 6, wobei
die Schaltsteuerungseinheit im Langdrückmodus eine Anweisung zum Ausführen des voreingestellten Zielgang an den Haupt-Controller sendet; und
die Schaltsteuerungseinheit im Doppelklickmodus eine Anweisung zum Ausführen des niedrigste Gangs an den Haupt-Controller sendet.

8. Aushubmaschinengashebelsteuervorrichtung nach Anspruch 6, wobei eine mittlere Stellung des Knopfs ein Startgang mit einer Drehung im Uhrzeigersinn für eine Gassteigerung und einer Drehung gegen den Uhrzeigersinn für eine Gasverringerung ist und beide Gänge eine Rücksetzfunktion aufweisen;
wobei der Knopf Kontaktmodi umfasst, die einen Kurzkontaktmodus und einen Langkontaktmodus umfassen;
wobei beim Kurzkontaktmodus in einem Gassteigerungsmodus jeder Kontakt bewirkt, dass die Schaltsteuerungseinheit eine Anweisung zum Erhöhen des Gangs um eins an den Haupt-Controller sendet; in einem Gasverringerungsmodus jeder Kontakt bewirkt, dass die Schaltsteuerungseinheit eine Anweisung zum Heruntersetzen des Gangs um eins an den Haupt-Controller sendet;
wobei beim Langkontaktmodus im Gassteigerungsmodus jeder Kontakt bewirkt, dass die Schaltsteuerungseinheit eine Anweisung zum Ausführen des höchsten Gangs an den Haupt-Controller sendet; im Gasverringerungsmodus jeder Kontakt bewirkt, dass die Schaltsteuerungseinheit eine Anweisung zum Ausführen des niedrigsten Gangs an den Haupt-Controller sendet;
wobei eine Kontaktdauer, die kürzer als eine voreingestellte Dauer ist, als kurzer Kontakt gilt; und eine Kontaktdauer, die länger als die voreingestellte Dauer ist, als langer Kontakt gilt.

9. Aushubmaschinengashebelsteuervorrichtung nach Anspruch 6, wobei der One-Touch-Startschalter einen Einzelklickmodus und einen Langdrückmodus aufweist;
wobei im Einzelklickmodus jedes Drücken nacheinander bewirkt, dass der Motor mit Strom versorgt, gestartet und heruntergefahren wird; und
im Langdrückmodus der Motor mit einer Verzögerung ausgeschaltet und heruntergefahren wird.

10. Aushubmaschinengashebelsteuervorrichtung nach den Ansprüchen 2 oder 6, wobei die Taste eine elektronische Schalttaste oder eine Touchscreen-Taste ist.

11. Aushubmaschinengashebelsteuervorrichtung nach den Ansprüchen 2 oder 6, wobei der elektronische Monitor insbesondere dazu dient, zu bestimmen, ob der Gangspeicher zu aktivieren ist, wobei, wenn der Gangspeicher aktiviert ist, der Motor mit der Drehzahl des niedrigsten Gangs startet und eine zuletzt gespeicherte Drehzahl erreicht; und den Zielgang, den niedrigsten Gang, den höchsten Gang und einen Einzelklickgang einzustellen.

12. Aushubmaschinengaspedalsteuerverfahren, umfassend:
Drehen des Knopfs (6-2) an der integrierten Schaltkonsole (6) in der Aushubmaschinengashebelsteuervorrichtung nach einem der Ansprüche 2 bis 5 in den ersten Gang, so dass das Stromversorgungsrelais aktivierend mit Strom versorgt wird, um den Motor mit Strom zu versorgen;
Steuern des Motors durch den One-Touch-Startschalter an der integrierten Schaltkonsole, um ihn zu starten;
Bestimmen, ob ein Ausschaltgangspeicher aktiviert ist, und wenn ja, Steuern des ECM durch den Haupt-Controller, um zu bewirken, dass der Motor vor dem Ausschalten eine letzte Gangdrehzahl ausführt;
wenn der Ausschaltgangspeicher nicht aktiviert ist, Prüfen des Modus der Taste an der integrierten Schaltkonsole;
als Reaktion auf den Langdrückmodus Steuern des ECM durch den Haupt-Controller, um zu bewirken, dass der Motor eine voreingestellte Zielgangdrehzahl ausführt;
als Reaktion auf den Doppelklickmodus Steuern des ECM durch den Haupt-Controller, um zu bewirken, dass der Motor eine voreingestellte Drehzahl des niedrigsten Gangs ausführt;
als Reaktion auf den Einzelklickmodus Bestimmen mittels des Haupt-Controllers, ob hochzuschalten oder herunterzuschalten ist; gleichzeitig Ändern des Gangzustands mit jedem Drücken des Knopfes, was bedeutet, dass sich der Gang im Hochschaltmodus immer weiter erhöht und sich der Gang im Herabschaltmodus immer weiter verringert; und Bestimmen des geänderten Gangs und der entsprechenden Drehzahl mittels des Haupt-Controllers und Steuern des ECM, um zu bewirken, dass der Motor die entsprechende Gangdrehzahl ausführt.

13. Aushubmaschinengaspedalsteuerverfahren, umfassend:
Drücken des One-Touch-Startschalters (6-3) an der integrierten Schaltkonsole (6) in der Aushubmaschinengashebelsteuervorrichtung nach einem der Ansprüche 6 bis 9, so dass das Stromversorgungsrelais aktivierend mit Strom versorgt wird, um den Motor mit Strom zu versorgen; erneutes Drücken des One-Touch-Startschalters, um den Motor zu starten;
Bestimmen, ob ein Ausschaltgangspeicher aktiviert ist, und wenn ja, Steuern des ECM durch den Haupt-Controller, um zu bewirken, dass der Motor vor dem Ausschalten eine letzte Gangdrehzahl ausführt;
wenn der Ausschaltgangspeicher nicht aktiviert ist, Prüfen des Modus der Taste an der integrierten Schaltkonsole;
als Reaktion auf den Langdrückmodus Steuern des ECM durch den Haupt-Controller, um zu bewirken, dass der Motor eine voreingestellte Zielgangdrehzahl ausführt;
als Reaktion auf den Doppelklickmodus Steuern des ECM durch den Haupt-Controller, um zu bewirken, dass der Motor eine voreingestellte Drehzahl des niedrigsten Gangs ausführt;
Prüfen des Gangzustands des Knopfes an der integrierten Schaltkonsole;
als Reaktion auf den Gassteigerungsmodus Bestimmen des Kontaktmodus; als Reaktion auf einen kurzen Kontakt Senden einer Anweisung zum Erhöhen des Gangs an den Haupt-Controller, Zulassen, dass der Haupt-Controller einen neuen Gang und eine entsprechende Drehzahl bestimmt, und Senden einer Anweisung zum Ausführen der entsprechenden Drehzahl an das ECM, um zu bewirken, dass der Motor die entsprechende Drehzahl ausführt; als Reaktion auf einen langen Kontakt Senden einer Anweisung zum Einstellen auf den höchsten Gang an den Haupt-Controller, Zulassen, dass der Haupt-Controller eine Drehzahl bestimmt, die der Anweisung entspricht, und Senden einer Anweisung zum Ausführen der entsprechenden Drehzahl an das ECM, um zu bewirken, dass der Motor die höchste Drehzahl ausführt;
als Reaktion auf den Gasverringerungsmodus Bestimmen des Kontaktmodus; als Reaktion auf einen kurzen Kontakt Senden einer Anweisung zum Heruntersetzen des Gangs an den Haupt-Controller, Zulassen, dass der Haupt-Controller einen neuen Gang und eine entsprechende Drehzahl bestimmt, und Senden einer Anweisung zum Ausführen der entsprechenden Drehzahl an das ECM, um zu bewirken, dass der Motor die entsprechende Drehzahl ausführt; als Reaktion auf einen langen Kontakt Senden einer Anweisung zum Einstellen auf den niedrigsten Gang an den Haupt-Controller, Zulassen, dass der Haupt-Controller eine Drehzahl bestimmt, die der Anweisung entspricht, und Senden einer Anweisung zum Ausführen der entsprechenden Drehzahl an das ECM, um zu bewirken, dass der Motor die niedrigste Drehzahl ausführt;
wobei eine Kontaktdauer, die kürzer als eine voreingestellte Dauer ist, als kurzer Kontakt gilt; und eine Kontaktdauer, die länger als die voreingestellte Dauer ist, als langer Kontakt gilt.

## Revendications

1. Dispositif de commande de papillon des gaz d'excavatrice, composé d'un contrôleur principal (I), d'un module de contrôle du moteur (2) (ECM), un moniteur électronique (3), une unité de démarrage (4), un relais d'alimentation (5) et un tableau de commande intégré (6) ;
dans lequel le contrôleur principal (1) et l'ECM (2) sont interconnectés via un bus, le moniteur électronique (3) et le contrôleur principal (1) sont connectés via un bus, le relais d'alimentation (5) est connecté électriquement au tableau de commande intégré (6), et l'unité de démarrage (4) est connectée électriquement au contrôleur principal ;
le contrôleur principal (1) est utilisé pour déterminer la vitesse du moteur selon une instruction de commande de vitesse envoyée par le tableau de commande intégré, la transmettre à l'ECM, et acquérir une vitesse pour chaque vitesse via le moniteur électronique ;
l'ECM (2) est utilisé pour contrôler un moteur afin qu'il exécute une vitesse correspondante :
le moniteur électronique (3) enregistre et règle les vitesses du papillon, comprenant une vitesse la plus élevée, la plus basse et une vitesse cible ;
l'unité de démarrage (4) sert à commander le démarrage d'un système d'excavatrice ;
le relais d'alimentation (5) est utilisé pour alimenter le moteur de l'excavatrice ; et
le tableau de commande intégré (6) est utilisé pour contrôler le papillon via des interrupteurs opérationnels et transmettre l'instruction de commande au contrôleur principal.

2. Dispositif de commande de papillon des gaz d'excavatrice selon la revendication 1, dans lequel le tableau de commande intégré comprend au moins une unité de commande et trois interrupteurs opérationnels : un bouton, une molette et un interrupteur de démarrage à une seule touche, et le contrôleur principal est connecté à l'unité de commande de commutation ;
le bouton (6-1) est utilisé pour commander les modes d'accélération, comprenant un mode de pression longue, un mode de double clic et un mode de clic simple ;
la molette (6-2) est utilisée pour commander l'alimentation électrique et la réinitialisation du moteur de l'excavatrice ;
l'interrupteur de démarrage à une seule touche (6-3) est utilisé pour commander le démarrage du moteur de l'excavatrice ; et
l'unité de commande de commutation (6-4) est utilisée pour transmettre les signaux de commande de chaque commutateur opérationnel au contrôleur principal.

3. Dispositif de commande de papillon des gaz d'excavatrice selon la revendication 2, dans lequel :
en mode de pression longue, l'unité de commande de commutation envoie une instruction pour exécuter la vitesse cible prédéfinie sur le contrôleur principal ;
en mode de double-clic, l'unité de commande de commutation envoie une instruction pour exécuter la vitesse la plus basse sur le contrôleur principal ; et
en mode de clic simple, l'unité de commande envoie une instruction de changement de vitesse au contrôleur principal, alternant entre le passage à la vitesse supérieure et à la vitesse inférieure à chaque pression.

4. Dispositif de commande de papillon des gaz d'excavatrice selon la revendication 2, dans lequel le bouton comporte une vitesse initiale, une première et une deuxième vitesses ;
dans la vitesse initiale, le moteur est en état de réinitialisation et n'est pas allumé ;
dans la première vitesse, le relais d'alimentation est alimenté pour s'engager afin de commander le démarrage du moteur de l'excavatrice ;
la deuxième vitesse sert à modifier le papillon des gaz ;
en mode de clic simple du bouton, chaque pression sur le bouton change l'état de la vitesse ; si le mode de clic simple actuel concerne un passage à la vitesse supérieure, l'unité de commande de commutation envoie une instruction au contrôleur principal pour augmenter la vitesse d'un rapport ;
et si le mode de clic simple actuel concerne une rétrogradation, l'unité de commande de commutation envoie une instruction au contrôleur principal pour diminuer la vitesse d'un rapport.

5. Dispositif de commande de papillon des gaz d'excavatrice selon la revendication 4, où le tableau de commande intégré intègre en outre un voyant indicateur de première vitesse à bouton, un voyant de première vitesse et un indicateur de deuxième vitesse pour indiquer une vitesse actuelle du bouton.

6. Dispositif de commande de papillon des gaz d'excavatrice selon la revendication 1, dans lequel le tableau de commande intégré comprend au moins une unité de commande et trois interrupteurs opérationnels : un bouton, une molette et un interrupteur de démarrage à une seule touche, et le contrôleur principal est connecté à l'unité de commande de commutation ;
le bouton (6-1) est utilisé pour commander les modes d'accélération, comprenant un mode de longue pression et un mode de double clic ;
la molette (6-2) est utilisée pour commander les vitesses de papillon des gaz, comprenant l'augmentation et la diminution des gaz :
l'interrupteur de démarrage à une seule touche (6-3) est utilisé pour commander la mise sous tension, le démarrage et l'arrêt du moteur de l'excavatrice ; et
l'unité de commande de commutation (6-4) est utilisée pour transmettre les instructions de commande de chaque commutateur opérationnel au contrôleur principal.

7. Dispositif de commande de papillon des gaz d'excavatrice selon la revendication 6, dans lequel :
en mode de pression longue, l'unité de commande de commutation envoie une instruction pour exécuter la vitesse cible prédéfinie sur le contrôleur principal ; et
en mode de double-clic, l'unité de commande de commutation envoie une instruction pour exécuter la vitesse la plus basse sur le contrôleur principal.

8. Dispositif de commande de papillon des gaz d'excavatrice selon la revendication 6, dans lequel une position centrale de la molette est une vitesse initiale, avec une rotation dans le sens horaire pour l'augmentation de la vitesse et une rotation antihoraire pour sa diminution, et les deux vitesses comportent une fonction de réinitialisation ;
la molette possède des modes de contact, comprenant un mode contact court et un mode contact long ;
en mode contact court, en mode d'augmentation des gaz, chaque contact fait envoyer par l'unité de commande de commutation une instruction au contrôleur principal pour augmenter la vitesse d'un rapport ; en mode de diminution des gaz, chaque contact fait envoyer à l'unité de commande de commutation une instruction au contrôleur principal pour diminuer l'engrenage d'un rapport ;
en mode contact long, en mode d'augmentation des gaz, un contact long fait envoyer par l'unité de commande de commutation une instruction au contrôleur principal pour exécuter la vitesse la plus élevée ; en mode de diminution des gaz, un contact long fait envoyer par l'unité de commande de commutation une instruction au contrôleur principal pour exécuter la vitesse la plus basse ;
si le temps de contact est inférieur à une durée prédéfinie, il est considéré comme un contact court ; et si le temps de contact est supérieur à la durée prédéfinie, il est considéré comme un contact long.

9. Dispositif de commande de papillon des gaz d'excavatrice selon la revendication 6, dans lequel l'interrupteur de démarrage à une seule touche a un mode de clic et un mode d'appui long ;
en mode de clic simple, chaque pression permet au moteur d'être mis sous tension, démarré et arrêté en séquence ; et
en mode de pression longue, le moteur est mis hors tension puis éteint avec un délai.

10. Dispositif de commande de papillon des gaz d'excavatrice selon les revendications 2 ou 6, dans lequel le bouton est un bouton d'interrupteur électronique ou un bouton à écran tactile.

11. Dispositif de commande de papillon des gaz d'excavatrice selon les revendications 2 ou 6, dans lequel le moniteur électronique est spécifiquement utilisé pour déterminer s'il faut activer la mémoire des rapports ; si la mémoire des rapports est activée, le moteur démarre à la vitesse la plus basse et atteint la dernière vitesse mémorisée ; et
régler la vitesse cible, la vitesse la plus basse, la plus haute et une vitesse à clic simple.

12. Procédé de commande de papillon des gaz d'une excavatrice comprenant :
tourner la molette (6-2) du tableau de commande intégré (6) dans le dispositif de commande de papillon des gaz d'excavatrice selon l'une quelconque des revendications 2 à 5 de la première vitesse, de sorte que le relais d'alimentation est alimenté pour commander la mise sous tension du moteur et commander le démarrage du moteur via l'interrupteur de démarrage à une seule touche sur le tableau de commande intégré ;
déterminer si la mémoire de la vitesse de mise hors tension est activée, et si oui, commander l'ECM via le contrôleur principal pour que le moteur exécute une dernière vitesse avant la mise hors tension ;
si la mémoire de vitesse de mise hors tension n'est pas activée, vérifier le mode du bouton sur le tableau de commande intégré ;
en réponse au mode de pression longue, commander l'ECM via le contrôleur principal pour faire exécuter au moteur un rapport de vitesse cible prédéfinie ;
en réponse au mode de double-clic, commander l'ECM via le contrôleur principal pour faire exécuter au moteur un rapport de vitesse cible la plus basse prédéfinie ;
en réponse au mode à un seul clic, déterminer, via le contrôleur principal, s'il faut changer de rapport vers le haut ou vers le bas ; en même temps, changer l'état du rapport à chaque pression sur la molette, c'est-à-dire qu'en mode montée du rapport, les rapports augmentent progressivement, et en mode de rétrogradation, les rapports diminuent progressivement ; et déterminer, via le contrôleur principal, le rapport modifié et la vitesse correspondante, et commander l'ECM pour que le moteur exécute le rapport de vitesse correspondant.

13. Procédé de commande de papillon des gaz d'une excavatrice comprenant :
appuyer sur l'interrupteur de démarrage à une seule touche (6-3) sur le tableau de commande intégré (6) dans le dispositif de commande de papillon des gaz d'excavatrice selon l'une quelconque des revendications 6 à 9, afin que le relais d'alimentation soit alimenté pour s'engager afin de commander la mise sous tension du moteur ; appuyer à nouveau sur l'interrupteur de démarrage à une seule touche pour démarrer le moteur ;
déterminer si la mémoire du rapport de mise hors tension est activée, et si oui, commander l'ECM via le contrôleur principal pour que le moteur exécute un dernier rapport de vitesse avant la mise hors tension ;
si la mémoire du rapport de mise hors tension n'est pas activée, vérifier le mode du bouton sur le tableau de commande intégré ;
en réponse au mode de pression longue, commander l'ECM via le contrôleur principal pour faire exécuter au moteur un rapport de vitesse cible prédéfinie ;
en réponse au mode de double-clic, commander l'ECM via le contrôleur principal pour faire exécuter au moteur un rapport de vitesse la plus basse prédéfinie ;
vérifier l'état du rapport sur la molette sur le tableau de commande intégré ;
en réponse au mode d'augmentation des gaz, déterminer le mode de contact ; en réponse à un contact court, envoyer une instruction au contrôleur principal pour augmenter la vitesse, permettant au contrôleur principal de déterminer un nouveau rapport et une vitesse correspondante, et envoyer une instruction à l'ECM pour exécuter le rapport correspondant afin que le moteur exécute le rapport correspondant ; en réponse à un contact long, envoyer une instruction au contrôleur principal pour régler au rapport le plus élevé, permettant au contrôleur principal de déterminer un rapport correspondant à l'instruction, et envoyer à l'ECM une instruction pour exécuter le rapport correspondant afin que le moteur exécute le rapport le plus élevé ;
en réponse au mode de diminution des gaz, déterminer le mode de contact ; en réponse à un contact court, envoyer au contrôleur principal une instruction pour diminuer le rapport, permettant au contrôleur principal de déterminer un nouveau rapport et une vitesse correspondante, et envoyer à l'ECM une instruction pour exécuter le rapport correspondant afin que le moteur exécute le rapport correspondant ; en réponse à un contact long, envoyer au contrôleur principal une instruction pour ajuster à la vitesse la plus basse, permettant au contrôleur principal de déterminer une vitesse correspondant à l'instruction, et envoyer à l'ECM une instruction pour exécuter la vitesse correspondante afin que le moteur exécute la vitesse la plus basse ;
si le temps de contact est inférieur à une durée prédéfinie, il est considéré comme un contact court ; et si le temps de contact est supérieur à la durée prédéfinie, il est considéré comme un contact long.
